# EUROPÄISCHE PATENTSCHRIFT

(11) **EP 3 900 176 B1**
(45) Veröffentlichungstag und Bekanntmachung des Hinweises auf die Patenterteilung: **26.08.2026**
(21) Anmeldenummer: 19817266.0
(22) Anmeldetag: 06.12.2019
(51) Int. Cl.: H02P 6/18, H02P 21/18

(54) **VORRICHTUNG UND VERFAHREN ZUR ERMITTLUNG EINER ROTORPOSITION UND ELEKTRISCHES ANTRIEBSSYSTEM**
APPARATUS AND METHOD FOR ASCERTAINING A ROTOR POSITION, AND ELECTRIC DRIVE SYSTEM
DISPOSITIF ET PROCÉDÉ DE DÉTERMINATION DE LA POSITION D'UN ROTOR ET SYSTÈME D'ENTRAÎNEMENT ÉLECTRIQUE

(30) Priorität: 20.12.2018 DE 102018222439
(43) Veröffentlichungstag der Anmeldung: 27.10.2021
(73) Patentinhaber: Robert Bosch GmbH, 70442 Stuttgart (DE)
(72) Erfinder: PAULUS, Sebastian, 73728 Esslingen am Neckar (DE); CHEN, Lei, 70437 Stuttgart (DE)
(86) Internationale Anmeldenummer: PCT/EP2019/084010
(87) Internationale Veröffentlichungsnummer: WO 2020/126553

(56) Entgegenhaltungen:
- DE-A1- 102013 204 194
- DE-A1- 102016 224 374
- DE-T2- 69 432 226
- US-A1- 2003 020 429

## Beschreibung

### Offenbarung der Erfindung

Die vorliegende Erfindung schafft eine Vorrichtung zur Ermittlung einer Rotorposition einer elektrischen Maschine, ein elektrisches Antriebssystem und ein Verfahren zur Ermittlung einer Rotorposition einer elektrischen Maschine mit den Merkmalen der unabhängigen Patentansprüche. Weitere vorteilhafte Ausführungsformen sind Gegenstand der abhängigen Patentansprüche.

### Demgemäß ist vorgesehen:

Eine Vorrichtung zur Ermittlung einer Rotorposition einer elektrischen Maschine, mit einem Stromsensor, einem Eingangsanschluss und einer Verarbeitungseinrichtung. Der Stromsensor ist dazu ausgelegt, Messwerte der elektrischen Phasenströme an den Anschlüssen der elektrischen Maschine zu erfassen. Der Eingangsanschluss ist dazu ausgelegt, eine Sollgröße für die elektrischen Phasenströme der elektrischen Maschine zu empfangen. Die Verarbeitungseinrichtung ist dazu ausgelegt, eine Differenz der durch den Stromsensor erfassten Messwerte und der Sollgröße für die elektrischen Phasenströme zu bilden. Weiterhin ist die Verarbeitungseinrichtung dazu ausgelegt, die Rotorposition der elektrischen Maschine unter Verwendung der gebildeten Differenz zu ermitteln.

### Weiterhin ist vorgesehen:

Ein elektrisches Antriebssystem mit einer elektrischen Maschine, einem Stromrichter und einer erfindungsgemäßen Vorrichtung zur Ermittlung einer Rotorposition einer elektrischen Maschine. Der Stromrichter ist dazu ausgelegt, unter Verwendung einer Sollgröße einen elektrischen Strom an den Anschlüssen der elektrischen Maschine bereitzustellen.

### Ferner ist vorgesehen:

Ein Verfahren zur Ermittlung einer Rotorposition einer elektrischen Maschine mit den Schritten des Erfassens von Messwerten elektrischer Phasenströme an den Anschlüssen der elektrischen Maschine; des Empfangens einer Sollgröße für die elektrischen Phasenströme der elektrischen Maschine; des Bildens einer Differenz der durch den Stromsensor erfassten Messwerte und der Sollgröße für die elektrischen Phasenströme; und des Ermittelns der Rotorposition der elektrischen Maschine unter Verwendung der gebildeten Differenz.

### Vorteile der Erfindung

Der vorliegenden Erfindung liegt die Erkenntnis zugrunde, dass für eine geberlose Ermittlung einer Rotorposition einer elektrischen Maschine in der Regel Testsignale an den Phasenanschlüssen der elektrischen Maschine eingespeist werden und daraufhin die Reaktion der elektrischen Maschine, insbesondere die aus den Testimpulsen resultierenden Ströme ausgewertet werden, um hieraus Rückschlüsse auf die aktuelle Rotorposition der elektrischen Maschine zu ziehen. Der vorliegenden Erfindung liegt darüber hinaus die Erkenntnis zugrunde, dass für den Betrieb der elektrischen Maschine neben den Testimpulsen auch elektrische Ströme an den Phasenanschlüssen der elektrischen Maschine eingespeist werden, um ein gewünschtes Drehmoment zu erzeugen. Für die Bestimmung der Rotorposition aufgrund der durch die Testimpulse resultierenden Ströme muss daher von einem Gesamtstrom der Stromanteil für das Erzeugen des Drehmoments entfernt werden. Konventionelle Verfahren basieren beispielsweise auf einer Hochpassfilterung. In Abhängigkeit von der für ein solches Hochpassfilter gewählten Grenzfrequenz kann es dabei zu Konflikten mit den Testsignalen für die Rotorwinkelbestimmung kommen.

Es ist daher eine Idee der vorliegenden Erfindung, dieser Erkenntnis Rechnung zu tragen und eine optimierte Signalverarbeitung für die Ermittlung einer geberlosen Rotorwinkelbestimmung bereitzustellen. Hierzu sieht die vorliegende Erfindung vor, von einem gemessenen Gesamtstrom an den Phasenanschlüssen der elektrischen Maschine rechentechnisch den Stromanteil für das Einstellen eines gewünschten Momentes zu eliminieren. Insbesondere kann hierzu die Kenntnis für den Sollwert des elektrischen Stroms für das gewünschte Moment genutzt werden. Dieser Sollwert ist in der Regel bekannt und verfügbar. Beispielsweise wird dieser Sollwert einem Stromrichter bereitgestellt, der die elektrische Maschine speist. Erfindungsgemäß wird dabei die Grundwelle bzw. Grundschwingung des elektrischen Stroms gemäß der Sollwertvorgabe von dem messtechnisch erfassten Gesamtstrom an den Phasenanschlüssen der elektrischen Maschine subtrahiert.

Auf diese Weise steht als Differenz zwischen dem messtechnisch erfassten Strömen an den Phasenanschlüssen der elektrischen Maschine und dem gemäß Sollwertvorgabe bekannten elektrischen Strom für den Antrieb der elektrischen Maschine folglich ein Stromsignal zur Verfügung, welches sehr gut die Reaktion der elektrischen Maschine auf die Testimpulse zur geberlosen Rotorwinkelbestimmung widerspiegelt. Somit kann diese Differenz als Ausgangsbasis für die weitere Berechnung der Rotorwinkelposition der elektrischen Maschine genutzt werden.

Die hierbei verwendeten Testimpulse für die Rotorwinkelbestimmung, die an den Phasenanschlüssen der elektrischen Maschine eingespeist werden, wie auch das konkrete Rechenverfahren zur Bestimmung der Rotorwinkelposition können dabei nahezu beliebig gewählt werden. Insbesondere können je nach Betriebszustand der elektrischen Maschine auch verschiedene Verfahren gewählt werden. Beispielsweise kann zwischen einer stillstehenden Maschine, einer sich langsam drehenden elektrischen Maschine und einer schnell rotierenden Maschine unterschieden werden. Darüber hinaus ist selbstverständlich auch eine beliebige andere Unterscheidung der Betriebszustände der elektrischen Maschine möglich. Dabei können beliebige bereits bekannte, konventionelle Verfahren genutzt werden, oder aber auch neuartige Ansätze zur Berechnung der Rotorwinkelposition basierend auf Stromsignalen infolge von Testimpulsen.

Der erfindungsgemäße Ansatz kann auf beliebige elektrische Maschinen angewendet werden, welche eine geberlose Rotorwinkelbestimmung basierend auf Testimpulsen ermöglichen. Als Beispiel sei hier eine Synchronmaschine, insbesondere eine mehrphasige, zum Beispiel dreiphasige Synchronmaschine genannt.

Gemäß einer Ausführungsform umfasst die die Vorrichtung zur Ermittlung der Rotorposition eine Filtereinrichtung. Die Filtereinrichtung kann dazu ausgelegt sein, eine Tiefpassfilterung der Sollgröße für die elektrischen Phasenströme auszuführen. Insbesondere kann die Grenzfrequenz der Filtereinrichtung einer eingestellten Frequenz für eine Grundwelle des Stromreglers der elektrischen Maschine entsprechen. Aus dem gewünschten Soll-Strom der Grundwelle einem Modell des Systemverhaltens kann daraufhin der zu erwartende Stromverlauf berechnet werden. Sofern keine bleibenden Regelabweichungen vorliegen, wird nach der Differenzbildung mit dem gemessenen Ist-Strom das Ergebnis nur noch die angeregten Frequenzen des geberlosen Verfahrens zur Rotorwinkelbestimmung beinhalten.

Gemäß einer Ausführungsform umfasst die Verarbeitungseinrichtung eine Transformationseinrichtung. Die Transformationseinrichtung ist dazu ausgelegt, die Messwerte der elektrischen Ströme an den Phasenanschlüssen zu transformieren. Insbesondere kann die Transformationseinrichtung eine Transformation der elektrischen Ströme in ein rotorfestes System durchführen. Die Transformation kann beispielsweise mittels eines Prozessors oder einer programmierbaren Logik erfolgen. Darüber hinaus sind auch beliebige andere Vorrichtungen möglich, die die erforderlichen Transformationen durchführen.

Gemäß einer Ausführungsform umfassen die Transformationen der Transformationseinrichtung eine Clark-Transformation und eine Park-Transformation der Messwerte der elektrischen Ströme an den Phasenanschlüssen. Die Transformationseinrichtung kann beispielsweise in einem ersten Transformationsschritt die Messwerte der elektrischen Ströme in den einzelnen Phasen der elektrischen Maschine in ein einfacheres zweiachsiges Koordinatensystem überführen. Die beiden Achsen des zweiachsigen Koordinatensystems können beispielsweise mit α und β bezeichnet werden. Entsprechend wird die Clark-Transformation auch als α-β-Transformation bezeichnet. In einem weiteren Schritt können die Werte des auf den Stator bezogenen a-β-Koordinatensystems in ein rotorfestes d/q-Koordinatensystem überführt werden. Eine derartige d/q- Transformation ist auch als Park-Transformation bekannt.

Gemäß einer Ausführungsform ist die Verarbeitungseinrichtung dazu ausgelegt, die Rotorposition der elektrischen Maschine bei Stillstand, langsamer Rotation und/oder schneller Rotation des Rotors zu ermitteln. Insbesondere ist es möglich, je nach Betriebszustand, das heißt Rotationsgeschwindigkeit des Rotors, ein unterschiedliches Verfahren zur Bestimmung der Rotorposition einzusetzen.

Erfindungsgemäß umfasst die Vorrichtung zur Ermittlung der Rotorposition eine Signalerzeugungseinrichtung. Die Signalerzeugungseinrichtung ist dazu ausgelegt, Testsignale zu generieren. Die Signalerzeugungseinrichtung ist dazu ausgelegt, die elektrischen Ströme an den Phasenanschlüssen der elektrischen Maschine mit den generierten Testsignalen zu überlagern. Auf diese Weise wird an den Phasenanschlüssen der elektrischen Maschine eine Kombination aus Testsignalen und elektrischen Strömen zum Einstellen des gewünschten Moments oder der gewünschten Drehzahl eingespeist. Durch die erfindungsgemäße Trennung ist es anschließend möglich, die Reaktion der elektrischen Maschine auf die Testsignale in den gemessenen Stromwerten zu extrahieren und anschließend daraus die Rotorposition zu berechnen.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der vorliegenden Erfindung hinzufügen.

### Kurze Beschreibung der Zeichnungen

Die vorliegende Erfindung wird nachfolgend anhand der in schematischen Figuren der Zeichnungen angegebenen Ausführungsbeispiele näher erläutert. Dabei zeigen:
- Figur 1:: eine schematische Darstellung eines elektrischen Antriebssystems gemäß einer Ausführungsform;
- Figur 2:: eine schematische Darstellung eines Blockschaltbilds zur Bestimmung der Signale für die Ermittlung der Rotorposition einer elektrischen Maschine; und
- Figur 3:: eine schematische Darstellung eines Ablaufdiagramms für ein Verfahren zur Ermittlung der Rotorposition gemäß einer Ausführungsform.

### Ausführungsformen der Erfindung

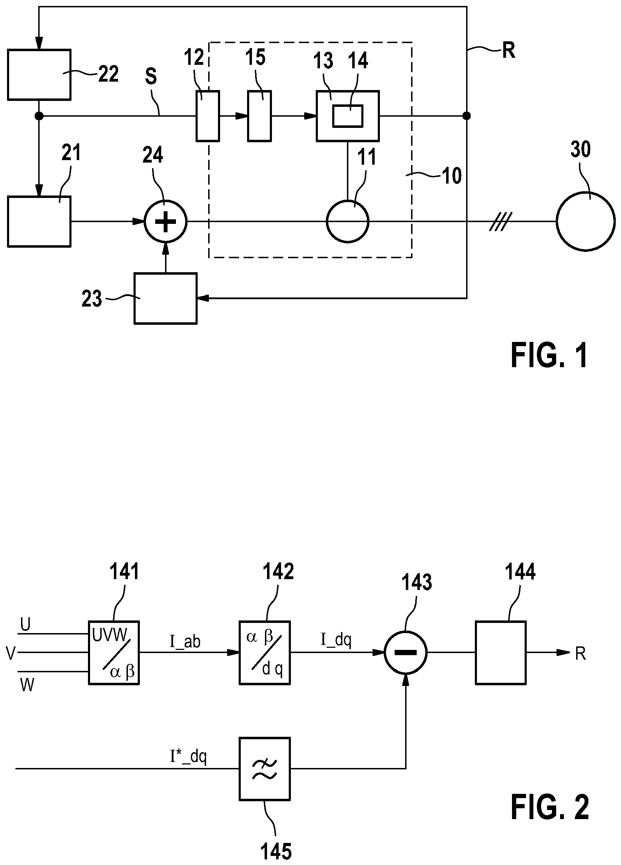

Figur 1 zeigt eine schematische Darstellung eines Prinzipschaltbilds eines elektrischen Antriebssystems gemäß einer Ausführungsform. Das elektrische Antriebssystem umfasst eine elektrische Maschine 30, die von einem elektrischen Stromrichter 21 gespeist wird. Beispielsweise kann es sich bei der elektrischen Maschine 30 um eine mehrphasige, insbesondere eine dreiphasige Synchronmaschine handeln. In diesem Fall kann von dem Stromrichter 21 ein dreiphasiger elektrischer Strom an den Phasenanschlüssen der elektrischen Maschine 30 bereitgestellt werden. Beispielsweise kann der Stromrichter 21 die Phasenströme an der elektrischen Maschine 30 auf Grundlage einer Sollwertvorgabe S einstellen. Bei einer mehrphasigen elektrischen Maschine 30 können beispielsweise mehrere gegeneinander phasenverschobene Wechselspannungen bzw. Wechselströme durch den Stromrichter 21 bereitgestellt werden. Die von dem Stromrichter 21 bereitgestellten Wechselspannungen weisen dabei eine von der Drehfrequenz der elektrischen Maschine 30 abhängige Frequenz auf.

Die Sollwertvorgabe S für die durch den Stromrichter 21 einzustellenden elektrischen Phasenströme kann beispielsweise von einer Steuereinrichtung 22 vorgegeben werden. Beispielsweise kann die Steuereinrichtung 22 unter Verwendung einer Vorgabe für ein einzustellendes Drehmoment, eine gewünschte Drehzahl oder andere Parameter einen Sollwert für die einzustellenden Phasenströme vorgeben. Dabei kann die Steuereinrichtung 22 beispielsweise auch die aktuelle Rotorposition mit einbeziehen.

Zur Ermittlung der Rotorposition der elektrischen Maschine 30 kann mittels einer Signalerzeugungseinrichtung 23 ein Testsignal generiert werden. Bei diesem Testsignal kann es sich beispielsweise um vorbestimmte Spannungspulse oder Folgen von vorbestimmten Spannungspulsen handeln. Diese Testsignale werden in den einzelnen Phasen der elektrischen Maschine 30 gleichzeitig oder abwechselnd eingeprägt. Hierzu können die von der Signalerzeugungseinrichtung 23 generierten Testsignale mittels einer Überlagerungseinrichtung 24 den von dem Stromrichter 21 bereitgestellten elektrischen Strömen überlagert werden. Alternativ ist es auch möglich, die Überlagerung bereist vor dem Stromrichter 21 auszuführen. In diesem Fall kann die Überlagerungseinrichtung 24 die Sollwerte kombinieren und als gemeinsame Sollgröße dem Stromrichter 21 zuführen.

Zur Auswertung der Rotorposition der elektrischen Maschine 30 ist die Kenntnis der Reaktion der elektrischen Maschine 30 auf die eingeprägten Testimpulse erforderlich. Hierzu können beispielsweise mittels eines oder mehrerer Stromsensoren 11 die elektrischen Ströme in den Zuleitungen zu den Phasenanschlüssen der elektrischen Maschine 30 gemessen werden. Die dabei gemessenen elektrischen Ströme umfassen somit eine Kombination der elektrischen Phasenströme von dem Stromrichter 21 und den elektrischen Strömen, welche auf Reaktion der Testimpulse in der elektrischen Maschine 30 hervorgerufen werden. Für die weitere Signalverarbeitung zur Bestimmung der Rotorposition müssen daher aus den Messwerten für den Gesamtstrom bzw. die Gesamtströme die Anteile der elektrischen Ströme infolge auf die Testimpulse extrahiert werden.

Die Vorrichtung 10 zur Ermittlung der Rotorposition umfasst neben dem oder den Stromsensoren 11 einen Eingangsanschluss 12, sowie eine Verarbeitungseinrichtung 13. Der Eingangsanschluss 12 kann beispielsweise mit der Steuereinrichtung 22 gekoppelt sein. Insbesondere kann der Eingangsanschluss 12 die Sollwertvorgabe S für die einzustellenden elektrischen Phasenströme empfangen. Hierbei kann es sich um die gleiche Sollwertvorgabe S handeln, welche auch an dem Stromrichter 21 bereitgestellt wird. Mittels der empfangenen Sollwertvorgabe S für die elektrischen Phasenströme der elektrischen Maschine 30, sowie den Messwerten für die elektrischen Phasenströme kann die Verarbeitungseinrichtung 13 daraufhin eine Differenz der Messwerte der gemessenen Phasenströme und der empfangenen Sollwertvorgabe bilden. Durch diese Differenzbildung wird somit aus dem Gesamtstrom an den Phasenanschlüssen der elektrischen Maschine 30 der Stromanteil von dem elektrischen Stromrichter 21 eliminiert. Somit verbleiben als Restsignale die Stromantworten auf die von der Signalerzeugungseinrichtung 23 generierten Testsignale.

Insbesondere kann eine Tiefpassfilterung der Sollgröße S für die elektrischen Phasenströme durchgeführt werden. Hierzu kann eine Filtervorrichtung15 in der Vorrichtung 10 zur Ermittlung der Rotorposition vorgesehen sein. Beispielsweise kann die Grenzfrequenz der Filtereinrichtung 15 einer eingestellten Frequenz für eine Grundwelle des Stromrichters 21 der elektrischen Maschine 30 entsprechen. Aus dem gewünschten Soll-Strom der Grundwelle einem Modell des Systemverhaltens kann daraufhin der zu erwartende Stromverlauf berechnet werden. Sofern keine bleibenden Regelabweichungen vorliegen, wird nach der Differenzbildung mit dem gemessenen Ist-Strom das Ergebnis nur noch die angeregten Frequenzen des geberlosen Verfahrens zur Rotorwinkelbestimmung beinhalten.

Unter Verwendung dieser Stromantworten kann die Verarbeitungseinrichtung 13 daraufhin die Rotorposition R, insbesondere den Rotorwinkel der elektrischen Maschine 30 berechnen. Hierzu sind beliebige geeignete Verfahren zur Berechnung der Rotorposition möglich. Je nach Verfahren ist es dabei auch möglich, eine zeitliche Änderung des Rotorwinkels zu bestimmen. Hierzu können beliebige konventionelle oder auch neuartige Verfahren zur Berechnung der Rotorwinkelposition einer elektrischen Maschine eingesetzt werden. Insbesondere kann sowohl die Generierung der Testsignale als auch das damit einhergehende Rechenverfahren zur Berechnung der Rotorwinkelposition auf den jeweiligen Anwendungsfall sowie die angeschlossene elektrische Maschine 30 angepasst sein. Da bereits zahlreiche konventionelle Verfahren bekannt sind, wird hier auf eine detaillierte Ausführung verzichtet.

Die ermittelte Rotorposition R kann beispielsweise der Steuereinrichtung 22 für die Stromregelung zur Verfügung gestellt werden, so dass die Steuereinrichtung 22 die weitere Regelung der elektrischen Maschine 30 unter Verwendung der Rotorposition R ausführen kann. Zusätzlich oder alternativ kann die Rotorposition R auch der der Signalerzeugungseinrichtung 23 zur Verfügung gestellt werden, und die Erzeugung der Testsignale oder Testimpulse entsprechend anzupassen.

Für die Bestimmung der Stromanteile zur Berechnung der Rotorwinkelposition R können insbesondere die Messwerte von dem oder den Stromsensoren 11 in geeigneter Weise aufbereitet werden. Hierzu ist es beispielsweise möglich, eine oder mehrere Transformationen anzuwenden, um die Differenzbildung zwischen Messwerten und Sollwertvorgabe zu vereinfachen. Beispielsweise können die mehreren gemessenen elektrischen Phasenströme mittels einer geeigneten Transformation, beispielsweise einer Clark- oder α/β-Transformation in ein Koordinatensystem mit zwei Achsen (α, β) überführt werden. Ferner kann beispielsweise auch eine Transformation von einem statorfesten Koordinatensystem in ein rotorfestes Koordinatensystem ausgeführt werden. Hierzu ist beispielsweise eine Park- oder d/q-Transformation möglich. Insbesondere wenn auch die Sollwertvorgaben für die einzustellenden elektrischen Phasenströme in einem entsprechenden Koordinatensystem vorliegen, so können auch die Messwerte der Phasenströme mittels geeigneter Transformation in ein entsprechendes Koordinatensystem überführt werden. Beispielsweise können derartige Transformationen in einer Transformationseinrichtung 14 der Verarbeitungseinrichtung 13 ausgeführt werden.

Figur 2 zeigt eine schematische Darstellung eines Blockschaltbilds zur Ermittlung der Stromantworten der Testsignale für eine Rotorwinkelbestimmung.

Ein erster Transformationsblock 141 kann beispielsweise die Messwerte U, V, W der Stromsensoren 11 als einzelne Phasenströme empfangen. Hierauf können die einzelnen Phasenströme beispielsweise in ein α-β-Koordinatensystem mittels einer geeigneten Transformation, beispielsweise einer Clark-Transformation überführt werden. Der erste Transformationsblock 141 liefert somit als Zwischenergebnis einen elektrischen Strom I_ab in einem α/β-Koordinatensystem. Dieser Strom I_ab kann mittels eines zweiten Transformationsblocks 142 in ein rotorfestes Koordinatensystem, beispielsweise ein d/q-Koordinatensystem überführt werden. Somit liefert der zweite Transformationsblock 142 einen elektrischen Strom I_dq in einem rotorfesten Koordinatensystem. Dieser Strom I_dq wird einem Differenzglied 143 zugeführt. Weiterhin wird die Sollwertvorgabe für den durch den Stromrichter 21 einzustellenden elektrischen Strom ebenfalls im d-q-Koordinatensystem als Strom I*_dq dem Differenzglied 143 zugeführt. Hierbei kann gegebenenfalls eine Tiefpassfilterung der Sollwertvorgabe erfolgen. Für die Tiefpassfilterung kann zum Beispiel ein Tiefpassfilter 145 vorgesehen sein. Die Grenzfrequenz des Tiefpassfilters 145 kann insbesondere der Grenzfrequenz eines dq-Stromreglers entsprechen. Die Differenz der beiden Ströme I_dq und I*_dq wird daraufhin in einem weiteren Verarbeitungsblock 144 zur Berechnung der Rotorwinkelposition R verwendet.

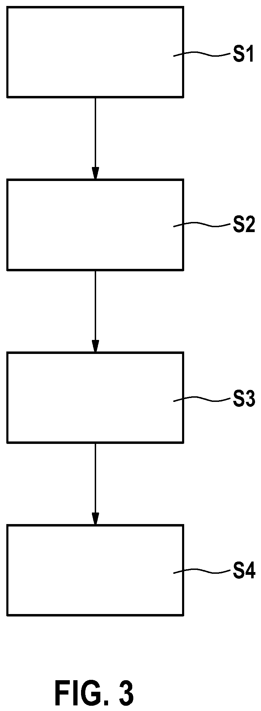

Figur 3 zeigt eine schematische Darstellung eines Ablaufdiagramms, wie es einem Verfahren zur Ermittlung einer Rotorposition einer elektrischen Maschine 30 zugrunde liegt. Das Verfahren umfasst einen Schritt S1 zum Erfassen von Messwerten der elektrischen Ströme an den Phasenanschlüssen der elektrischen Maschine 30. In einem Schritt S2 wird eine Sollgröße S für elektrische Phasenströme der elektrischen Maschine 30 empfangen. In Schritt S4 wird eine Differenz der erfassten Messwerte der elektrischen Ströme an den Phasenanschlüssen und der Sollgröße S für die elektrischen Phasenströme gebildet. Schließlich wird in Schritt S4 die Rotorposition der elektrischen Maschine 30 unter Verwendung der gebildeten Differenz ermittelt.

Darüber hinaus sind für das Verfahren auch alle zuvor im Zusammenhang mit der Vorrichtung beschriebenen Operationen möglich.

Zusammenfassend betrifft die vorliegende Erfindung eine Signalverarbeitung für eine geberlose Bestimmung einer Rotorposition. Hierzu werden die elektrischen Ströme in den Phasenanschlüssen einer elektrischen Maschine mit Testsignalen beaufschlagt und die Gesamtströme in den Phasenanschlüssen der elektrischen Maschine gemessen. Die Stromantworten auf die Testsignale werden durch Differenzbildung der gemessenen Phasenströme und den Sollwertvorgaben für die Phasenströme bestimmt. Basierend auf dieser Differenz kann ein beliebiges Verfahren zur Berechnung der Rotorwinkelposition ausgeführt werden.

## Patentansprüche

1. Vorrichtung (10) zur Ermittlung einer Rotorposition einer elektrischen Maschine (30), mit:
einem Stromsensor (11), der dazu ausgelegt ist, Messwerte der elektrischen Phasenströme an den Anschlüssen der elektrischen Maschine (30) zu erfassen;
einem Eingangsanschluss (12), der dazu ausgelegt ist, eine Sollgröße (S) für elektrische Phasenströme der elektrischen Maschine (30) zu empfangen;
einer Signalerzeugungseinrichtung (23), die dazu ausgelegt ist, Testsignale zu generieren, und die elektrischen Ströme an den Phasenanschlüssen der elektrischen Maschine (30) mit den generierten Testsignalen zu überlagern;
eine Verarbeitungseinrichtung (13), die dazu ausgelegt ist, eine Differenz der durch den Stromsensor erfassten Messwerte und der Sollgröße (S) für die elektrischen Phasenströme zu bilden, und die Rotorposition der elektrischen Maschine (30) unter Verwendung der gebildeten Differenz zu ermitteln,
**dadurch gekennzeichnet, dass**
die Differenz der durch den Stromsensor erfassten Messwerte und der Sollgröße (S) für die elektrischen Phasenströme derart gebildet wird, dass die Grundwelle bzw. Grundschwingung des elektrischen Stroms gemäß der Sollwertvorgabe von dem messtechnisch erfassten Gesamtstrom an den Phasenanschlüssen der elektrischen Maschine subtrahiert wird.

2. Vorrichtung (10) nach Anspruch 1, mit einer Filtereinrichtung (15), die dazu ausgelegt ist, eine Tiefpassfilterung der Sollgröße (S) für die elektrischen Phasenströme auszuführen.

3. Vorrichtung (10) nach Anspruch 1 oder 2, wobei die Verarbeitungseinrichtung (13) eine Transformationseinrichtung (14) umfasst, die dazu ausgelegt ist, die Messwerte der elektrischen Phasenströme an den Anschlüssen in ein rotorfestes System zu transformieren.

4. Vorrichtung (10) nach Anspruch 3, wobei die Transformationseinrichtung (14) dazu ausgelegt ist, eine Clark-Transformation und eine Park-Transformation der Messerwerte der elektrischen Phasenströme an den Anschlüssen durchzuführen.

5. Vorrichtung (10) nach einem der Ansprüche 1 bis 4, wobei die Verarbeitungseinrichtung (13) dazu ausgelegt ist, die Rotorposition der elektrischen Maschine (30) bei Stillstand, langsamer Rotation und/oder schneller Rotation des Rotors zu ermitteln.

6. Elektrisches Antriebssystem, mit:
einer elektrischen Maschine (30);
einem Stromrichter (21), der dazu ausgelegt ist, unter Verwendung einer Sollgröße (S) elektrische Ströme an den Anschlüssen der elektrischen Maschine (30) bereitzustellen; und
eine Vorrichtung (10) zur Ermittlung einer Rotorposition einer elektrischen Maschine (30) gemäß einem der Ansprüche 1 bis 5.

7. Verfahren zur Ermittlung einer Rotorposition einer elektrischen Maschine (30), mit den Schritten:
Generieren von Testsignalen mittels einer Signalerzeugungseinrichtung (23);
Überlagern von elektrischen Strömen an den Phasenanschlüssen der elektrischen Maschine (30) mit den generierten Testsignalen mittels der Signalerzeugungseinrichtung (23);
Erfassen (S1) von Messwerten der elektrischen Phasenströme an den Anschlüssen der elektrischen Maschine (30);
Empfangen (S2) einer Sollgröße für elektrische Phasenströme der elektrischen Maschine (30);
Bilden (S3) einer Differenz der erfassten Messwerte der elektrischen Ströme an den Phasenanschlüssen der elektrischen Maschine (30) und der Sollgröße (S) für die elektrischen Phasenströme; und
Ermitteln (S4) der Rotorposition der elektrischen Maschine (30) unter Verwendung der gebildeten Differenz
**dadurch gekennzeichnet, dass**
das Bilden (S3) der Differenz der erfassten Messwerte der elektrischen Ströme an den Phasenanschlüssen der elektrischen Maschine (30) und der Sollgröße (S) für die elektrischen Phasenströme derart erfolgt, dass die Grundwelle bzw. Grundschwingung des elektrischen Stroms gemäß der Sollwertvorgabe von dem messtechnisch erfassten Gesamtstrom an den Phasenanschlüssen der elektrischen Maschine subtrahiert wird.

## Claims

1. Apparatus (10) for ascertaining a rotor position of an electric machine (30), comprising:
a current sensor (11) which is designed to capture measured values of the electrical phase currents at the terminals of the electric machine (30);
an input terminal (12) which is designed to receive a setpoint variable (S) for electrical phase currents of the electric machine (30);
a signal generation device (23) which is designed to generate test signals and to superimpose the generated test signals on the electrical currents at the phase terminals of the electric machine (30);
processing device (13) which is designed to form a difference between the measured values captured by the current sensor and the setpoint variable (S) for the electrical phase currents, and to ascertain the rotor position of the electric machine (30) using the difference formed,
**characterized in that**
the difference between the measured values captured by the current sensor and the setpoint variable (S) for the electrical phase currents is formed in such a way that the fundamental wave or fundamental oscillation of the electrical current is subtracted from the total current captured using metrology at the phase terminals of the electric machine according to the setpoint specification.

2. Apparatus (10) according to Claim 1, comprising a filter device (15) which is designed to perform low-pass filtering of the setpoint variable (S) for the electrical phase currents.

3. Apparatus (10) according to Claim 1 or 2, wherein the processing device (13) comprises a transformation device (14) which is designed to transform the measured values of the electrical phase currents at the terminals into a rotor-fixed system.

4. Apparatus (10) according to Claim 3, wherein the transformation device (14) is designed to perform a Clark transformation and a Park transformation of the measured values of the electrical phase currents at the terminals.

5. Apparatus (10) according to one of Claims 1 to 4, wherein the processing device (13) is designed to ascertain the rotor position of the electric machine (30) during standstill, slow rotation and/or quick rotation of the rotor.

6. Electric drive system, comprising:
an electric machine (30);
a power converter (21) which is designed to provide electrical currents at the terminals of the electric machine (30) using a setpoint variable (S); and
an apparatus (10) for ascertaining a rotor position of an electric machine (30) according to one of Claims 1 to 5.

7. Method for ascertaining a rotor position of an electric machine (30), comprising the following steps:
generating test signals by means of a signal generation device (23);
superimposing the generated test signals on electrical currents at the phase terminals of the electric machine (30) by means of the signal generation device (23);
capturing (S1) measured values of the electrical phase currents at the terminals of the electric machine (30);
receiving (S2) a setpoint variable for electrical phase currents of the electric machine (30);
forming (S3) a difference between the captured measured values of the electrical currents at the phase terminals of the electric machine (30) and the setpoint variable (S) for the electrical phase currents; and
ascertaining (S4) the rotor position of the electric machine (30) using the difference formed,
**characterized in that**
the difference between the captured measured values of the electrical currents at the phase terminals of the electric machine (30) and the setpoint variable (S) for the electrical phase currents is formed (S3) in such a way that the fundamental wave or fundamental oscillation of the electrical current is subtracted from the total current captured using metrology at the phase terminals of the electric machine according to the setpoint specification.

## Revendications

1. Dispositif (10) de détermination d'une position de rotor d'une machine électrique (30), avec :
un capteur de courant (11), qui est conçu pour détecter des valeurs de mesure des courants de phase électriques sur les bornes de la machine électrique (30) ;
une borne d'entrée (12), qui est conçue pour recevoir une grandeur de consigne (S) pour des courants de phase électriques de la machine électrique (30) ;
un système de génération de signaux (23), qui est conçu pour générer des signaux de test et pour superposer les signaux électriques sur les bornes de phase de la machine électrique (30) aux signaux de test générés ;
un système de traitement (13), qui est conçu pour former une différence entre les valeurs de mesure détectées par le capteur de courant et la grandeur de consigne (S) pour les courants de phase électriques et pour déterminer la position du rotor de la machine électrique (30) en utilisant la différence formée, **caractérisé en ce que**
la différence entre les valeurs de mesure détectées par le capteur de courant et la grandeur de consigne (S) pour les courants de phase électriques est formée de telle manière que l'onde fondamentale ou l'oscillation fondamentale du courant électrique est soustraite du courant total détecté par une technique de mesure sur les bornes de phase de la machine électrique selon la spécification de valeur de consigne.

2. Dispositif (10) selon la revendication 1, avec un système de filtrage (15), qui est conçu pour exécuter un filtrage passe-bas de la grandeur de consigne (S) pour les courants de phase électriques.

3. Dispositif (10) selon la revendication 1 ou 2, le système de traitement (13) comprenant un système de transformation (14), qui est conçu pour transformer les valeurs de mesure des courants de phase électriques sur les bornes en un système solidaire du rotor.

4. Dispositif (10) selon la revendication 3, le système de transformation (14) étant conçu pour effectuer une transformée de Clarke et une transformée de Park des valeurs de mesure des courants de phase électriques sur les bornes.

5. Dispositif (10) selon l'une des revendications 1 à 4, le système de traitement (13) étant conçu pour déterminer la position du rotor de la machine électrique (30) pendant l'arrêt, une rotation lente et/ou une rotation rapide du rotor.

6. Système d'entraînement électrique, avec :
une machine électrique (30) ;
un convertisseur de courant (21), qui est conçu pour fournir des courants électriques sur les bornes de la machine électrique (30) en utilisant une grandeur de consigne (S) ; et
un dispositif (10) destiné à déterminer une position de rotor d'une machine électrique (30) selon l'une des revendications 1 à 5.

7. Procédé de détermination d'une position de rotor d'une machine électrique (30), avec les étapes :
génération de signaux de test au moyen d'un système de génération de signaux (23) ;
superposition de courants électriques sur les bornes de phase de la machine électrique (30) aux signaux de test générés au moyen du système de génération de signaux (23) ;
détection (S1) de valeurs de mesure des courants de phase électriques sur les bornes de la machine électrique (30) ;
réception (S2) d'une grandeur de consigne pour des courants de phase électriques de la machine électrique (30) ;
formation (S3) d'une différence entre les valeurs de mesure détectées des courants électriques sur les bornes de phase de la machine électrique (30) et la grandeur de consigne (S) pour les courants de phase électriques ; et
détermination (S4) de la position de rotor de la machine électrique (30) en utilisant la différence formée,
**caractérisé en ce que**
la formation (S3) de la différence entre les valeurs de mesure détectées des courants électriques sur les bornes de phase de la machine électrique (30) et la grandeur de consigne (S) pour les courants de phase électriques est effectuée de telle manière que l'onde fondamentale ou l'oscillation fondamentale du courant électrique est soustraite du courant total détecté par une technique de mesure sur les bornes de phase de la machine électrique selon la spécification de valeur de consigne.
